# FASCICULE DE BREVET EUROPEEN

(11) **EP 1 648 755 B1**
(45) Date de publication et mention de la délivrance du brevet: **18.04.2007**
(21) Numéro de dépôt: 04767862.8
(22) Date de dépôt: 30.06.2004
(51) Int. Cl.: B62D 6/00, B62D 5/04

(54) **Procédé de gestion de la commande de l'angle de braquage d'un système de direction d'un vehicule**
Verfahren zur handhabung der Steuerung eines maximalen Lenkwinkels eines Fahrzeuglenksystem
Method for managing the control of a maximum steering angle of a vehicle steering system

(30) Priorité: 25.07.2003 FR 0350373
(43) Date de publication de la demande: 26.04.2006
(73) Titulaire: RENAULT TRUCKS, 69800 St Priest (FR)
(72) Inventeur: DECHAMP, François, F-71250 Cluny (FR)
(74) Mandataire: Vuillermoz, Bruno
(86) Numéro de dépôt international: PCT/FR2004/050300
(87) Numéro de publication internationale: WO 2005/012064

(56) Documents cités:
- EP-A- 1 088 739
- US-A- 5 944 137
- US-A- 6 041 882

## Description

### Domaine technique

L'invention se rattache au domaine des systèmes de commande de direction équipant les véhicules automobiles, et notamment mais non exclusivement les véhicules industriels tels que les camions. Elle concerne plus spécifiquement les systèmes de direction dans lesquels le braquage des roues n'est pas obtenu par une transmission mécanique, mais par le biais d'un ou plusieurs dispositifs mettant en oeuvre des circuits hydrauliques, électro-hydrauliques ou électriques. Ce type de direction est connu sous l'appellation de "steer by wire".

L'invention vise plus spécifiquement un procédé de commande de direction au moyen de ce type de système, en visant à optimiser la dynamique de l'angle de braquage, en fonction des mouvements imposés par le conducteur à l'organe de commande de direction.

### Techniques antérieures

De façon générale, les systèmes de direction en "steer by wire" agissent sur l'angle de braquage des roues au moyen d'un ou plusieurs actionneurs, commandés en fonction de la position angulaire du volant, ou d'un manipulateur se présentant sous la forme d'un manche ou d'un levier, et donc de façon plus générale d'un organe de commande de l'angle de direction.

L'absence de liaison mécanique dans le système de direction permet une commande relativement directe, et permet que l'amplitude des mouvements du chauffeur soit sensiblement réduite. En effet, l'organe de commande de direction peut être manipulé avec beaucoup de facilité, et avec une amplitude réduite. Toutefois, du fait de cette faible amplitude, et donc de la sensibilité relativement élevée de ce type de commande, il est nécessaire que le chauffeur soit particulièrement attentif, et qu'il maîtrise parfaitement ses mouvements, pour éviter d'imposer des mouvements trop brusques au véhicule.

Ces mouvements trop brusques sont non seulement la source d'écarts de trajectoires, mais également d'usure des pneumatiques, de contraintes mécaniques ou hydrauliques imposées aux différents actionneurs, ainsi que d'une consommation d'énergie inutile.

Pour résoudre ce problème, on a proposé dans le document US 5 944 137, qui décrit le préambule de la revendication 1, d'assurer un filtrage du signal issu de l'organe de commande de direction à destination des actionneurs responsables du braquage des roues directrices. Plus précisément, ce filtrage est du type passe-bas, dont la fréquence de coupure de ce filtrage peut être modifiés dynamiquement en fonction de différents facteurs de fonctionnement. Ainsi, la fréquence de coupure de ce filtrage peut diminuer lorsque augmente soit la vitesse, soit le facteur de démultiplication (c'est-à-dire le rapport entre l'angle de braquage et l'angle qu'il est nécessaire d'appliquer au volant pour obtenir cet angle de braquage) ou bien encore avec l'amplitude du mouvement des roues, ou bien encore avec une combinaison de plusieurs de ces facteurs. On conçoit que ce type de filtrage provoque la perte de toutes les informations de haute fréquence.

### Exposé de l'invention

L'invention concerne donc un procédé de gestion de la commande de l'angle de braquage d'un système de direction d'un véhicule. Un tel procédé permet d'élaborer la consigne à appliquer à un ou plusieurs actionneurs agissant sur l'angle de braquage des roues, à partir d'un signal de commande issu de l'organe de commande de direction, qui peut être un volant ou un manipulateur de type mini-manche.

Conformément à l'invention, la consigne à appliquer à l'actionneur comporte au moins deux composantes, à savoir :
■ une première composante résultant d'un traitement de tout ou partie du signal issu de l'organe de commande de direction ;
■ une seconde composante élaborée à partir de ladite première composante, et du signal issu de l'organe de commande de direction. Cette seconde composante est élaborée de manière à obtenir après une durée prédéterminée, une consigne globale identique pour une même valeur de signal issu de l'organe de commande de direction.

Autrement dit, l'invention consiste à utiliser le signal issu de l'organe de commande de direction pour lui faire subir un traitement qui peut être un filtrage fréquentiel, un filtrage par saturation ou bien un écrêtage, de manière à éliminer une partie de certains phénomènes qui peuvent s'interpréter comme une manoeuvre brusque ou involontaire de la part du chauffeur. Ce signal traité est ensuite utilisé pour former une partie de la consigne à appliquer à l'actionneur.

Cette consigne prend également en compte une seconde composante qui est élaborée à partir de la fraction traitée, ainsi que du signal issu directement de l'organe de commande de direction, avec éventuellement un traitement spécifique. Cette seconde composante correspond à une fraction de la consigne qui est temporairement stockée, puis intégrée à la consigne globale au fur et à mesure, en limitant ainsi les effets de trop brusques variations dans le signal issu de l'organe de commande.

Cette seconde composante peut être ainsi élaborée de telle manière qu'elle présente une amplitude maximum prédéterminée, évitant ainsi l'application d'une consigne trop importante à l'actionneur responsable du braquage. De manière complémentaire, on peut également prévoir de limiter les dérivées d'un ordre quelconque de cette seconde composante.

En tout état de cause, cette seconde composante de la consigne est calculée de telle manière que l'angle de braquage obtenu soit, après un certain temps, toujours le même pour une position angulaire du volant donnée, ou du manche du manipulateur, et ce quelle que soit la manière, c'est-à-dire la vitesse ou l'accélération angulaire, avec laquelle le chauffeur effectue manoeuvre le volant.

Une partie de la consigne étant temporisée, l'invention fait en sorte que l'actionneur n'est pas commandé rapidement et successivement dans deux sens différents, dans le cas où le chauffeur effectue des mouvements rapides et intempestifs.

En pratique, le traitement effectué pour obtenir la première composante de la consigne, s'effectue sur la valeur de l'angle issu de l'organe de commande de direction, ou bien encore de sa dérivée, c'est-à-dire de la vitesse de rotation du volant, ou bien encore de n'importe quelle dérivée d'ordre supérieur si besoin est.

La consigne appliquée à l'actionneur peut également comporter une composante supplémentaire qui correspond directement à une partie du signal issu de l'organe de commande de direction, et qui ne subit donc aucun traitement particulier. Les proportions de ces différentes composantes peuvent être adaptées en fonction du comportement souhaité, et notamment de la nécessité de donner au système une capacité à atténuer les mouvements intempestifs.

Il est ainsi possible de paramétrer les différentes composantes de manière à ce que la conduite soit plus directe, donc en atténuant les traitements caractéristiques, en fonction des caractéristiques du véhicule, du type de trajet, de la charge du véhicule, ou d'autres paramètres.

### Description sommaire des figures

La manière de réaliser l'invention ainsi que les avantages qui en découlent ressortiront bien de la description du mode de réalisation qui suit, à l'appui des figures annexées dans lesquelles :
La figure 1 est un synoptique général et simplifié d'un système de commande de direction.
La figure 2 est un schéma bloc simplifié illustrant les différentes fonctions réalisées dans le cadre de l'élaboration de la consigne appliquée à l'actionneur responsable du braquage des roues.

### Manière de réaliser l'invention

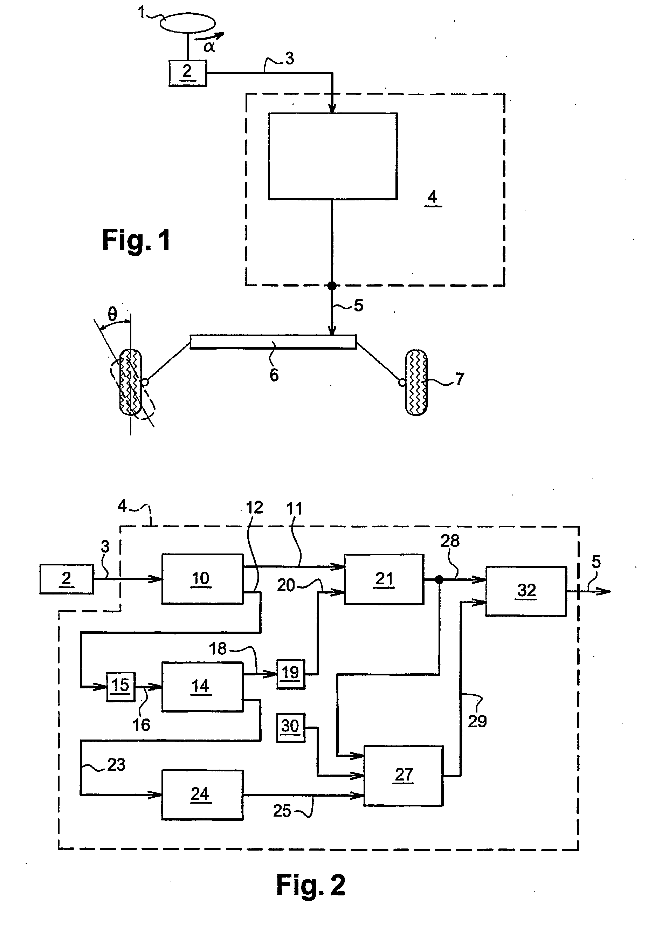

Un système de commande de direction du type "steer by wire" peut être réalisé, comme illustré à la figure 1 schématiquement par un organe de commande de direction (1), qui dans la forme illustrée est assimilable à un volant. L'angle α est mesuré par un capteur (2) qui génère un signal (3) acheminé à un calculateur (4). Ce calculateur (4) génère un signal de consigne (5) appliqué à un actionneur (6) responsable du braquage des roues (7), et des modifications de l'angle θ que font chacune des roues avec la direction dans laquelle le véhicule est en ligne droite.

Bien entendu, l'actionneur (6) peut être de type très varié, et notamment hydraulique, électrohydraulique ou bien encore totalement électrique.

Le signal (5) de consigne est alors adapté en fonction du type d'actionneur utilisé.

La figure 2 illustre un exemple particulier de mode de traitement du signal (3) issu de l'organe de commande de direction. Ce schéma est donné bien entendu à titre indicatif, et chacun des éléments qu'il contient peut être réalisé soit sous forme logicielle, soit sous forme matérielle sans sortir du cadre de l'invention.

Certains des éléments peuvent d'ailleurs être réalisés de manière combinée, le schéma étant uniquement donné à titre d'explication.

Ainsi, le signal (3) élaboré par la mesure d'angle du volant (1) est acheminé au calculateur (4), et traité par, dans une première étape (10), une partie (11) de ce signal n'est pas traitée et est destinée à être acheminée directement à l'actionneur. L'autre fraction (12) de ce signal est destinée à être traitée au niveau du bloc (14).

Dans la forme illustrée, le signal (3), et donc la fraction traitée (12) correspond à l'angle de rotation du volant qui est ensuite dérivé au niveau du bloc (15) pour former un signal (16) représentatif de la vitesse de braquage du volant.

Comme déjà exposé, cette dérivation peut être d'un ordre supérieur, lorsque l'on souhaite effectuer un traitement non pas sur la vitesse, mais sur l'accélération
ou des dérivés d'ordre supérieur de l'angle de rotation du volant.

Au niveau du bloc (14), cette vitesse de braquage peut être traitée de différentes manières, par un traitement fréquentiel par exemple de type PID, ou bien encore en assurant des fonctions de saturation ou d'écrêtage. La vitesse (18) issue de ce traitement est ensuite intégrée au niveau de l'intégrateur (19) pour définir un signal (20) correspondant à une valeur angulaire elle-même acheminée au bloc (21) assurant une partie de la re-combinaison de la future consigne de l'actionneur.

La portion (23) de la vitesse de braquage qui n'est pas filtrée est ensuite acheminée à un tampon (24) assurant notamment l'opération d'intégration en vue d'élaborer un signal (25) représentatif d'un décalage angulaire.

Le bloc (27) assure l'élaboration d'un signal (29) représentatif d'un angle de rattrapage destiné à être combiné avec la première composante de la consigne (28). Cet angle de rattrapage (29) correspond à un vidage du tampon (24). Ce vidage tient compte dans la forme illustrée d'une vitesse de braquage maximum (30), ainsi que de la première composante (28) de la consigne appliquée à l'actionneur.

Les première et deuxième composants (28, 29) de la consigne sont ensuite combinés, par exemple par une addition au niveau du bloc (32) afin d'élaborer la consigne globale (5) qui sera appliquée à l'actionneur. L'application de l'angle de rattrapage (29) permet de tenir compte de l'intégralité de la consigne appliquée par le chauffeur sur le volant, mais en lissant la dynamique de traitement, et en distribuant au fur et à mesure une partie de cette consigne.

Bien entendu, ce principe peut être mis en oeuvre en utilisant des fonctions et des agencements différents de ceux décrits à la figure 2, dès lors qu'une partie du signal issu de l'organe de commande est traité, et que l'autre partie est stockée temporairement puis "distillée" au fur et à mesure pour former une fraction de la consigne appliquée à l'actionneur.

Il ressort de ce qui précède que le procédé conforme à l'invention permet d'assurer un lissage de la dynamique des roues, en atténuant les effets de coups de volant brusques, et intempestifs. Il en résulte une amélioration de la sécurité et une diminution de l'usure des différents éléments de la chaîne de commande du braquage.

## Revendications

1. Procédé de gestion de la commande de l'angle de braquage d'un système de direction de véhicule, permettant d'élaborer la consigne à appliquer à un ou plusieurs actionneurs (6) agissant sur l'angle de braquage (θ) des roues, à partir d'un signal de commande (3) issu de l'organe de commande de direction (1), ladite consigne à appliquer comportant une première composante (28) résultant d'un traitement de tout ou partie du signal (3) issu de l'organe de commande de direction, **caractérisé en ce que** ladite consigne comporte au moins une seconde composante (29) élaborée à partir de ladite première composante (28), et à partir du signal issu de l'organe de commande de direction, l'élaboration de ladite seconde composante comportant une étape qui consiste à élaborer un signal (25) représentatif d'un décalage angulaire, et à élaborer un signal (29) représentatif d'un angle de rattrapage destiné à être combiné avec la première composante de la consigne (28) de manière à obtenir, après une durée prédéterminée, une consigne identique pour une même valeur de signal issu de l'organe de commande de direction.

2. Procédé selon la revendication 1, **caractérisé en ce que** le traitement (14) appliqué pour obtenir la première composante inclut un filtrage fréquentiel.

3. Procédé selon la revendication 1, **caractérisé en ce que** le traitement (14) appliqué pour obtenir la première composante inclut une saturation ou un écrêtage.

4. Procédé selon la revendication 1, **caractérisé en ce que** la seconde composante (29) présente une amplitude maximum prédéterminée.

5. Procédé selon la revendication 1, **caractérisé en ce que** le signal de commande (3) issu de l'organe de commande de direction est représentatif de l'angle de rotation de ce dernier.

## Claims

1. A method for managing the control of a steering angle of a vehicle steering system making it possible to produce the set point to be applied to one or more actuators (6) influencing the steering angle (θ) of the wheels on the basis of a control signal (3) obtained from steering control unit (1), said set point that is to be applied comprising a first component (28) resulting from processing of all or part of signal (3) obtained from steering control unit, **characterised in that** said set point comprises at least one second component (29) produced on the basis of first component (28) and, on the basis of the signal obtained from the steering control unit, producing said second component comprising a step that involves producing a signal (25) that is representative of an angular offset and producing a signal (29) that is representative of an angular adjustment intended to be combined with the first component of set point (28) so as to obtain, after a predetermined time, an identical set point for a given value of signal obtained from the steering control unit.

2. A method as claimed in claim 1, **characterised in that** processing (14) applied in order to obtain the first component includes frequency filtering.

3. A method as claimed in claim 1, **characterised in that** processing (14) applied to obtain the first component includes saturation or clipping.

4. A method as claimed in claim 1, **characterised in that** second component (29) has a maximum predetermined amplitude.

5. A method as claimed in claim 1, **characterised in that** control signal (3) obtained from the steering control unit is representative of the latter's rotation angle.

## Patentansprüche

1. Steuerungsverfahren für die Steuerung des Einschlagwinkels eines Fahrzeuglenkungssystems, das es ermöglicht, die an ein Stellglied oder mehrere Stellglieder (6), das/die auf den Einschlagwinkel (θ) der Räder wirkt/wirken, anzulegende Stellgröße aus einem Steuersignal (3) zu erarbeiten, das von einem Lenkungssteuerteil (1) abgegeben wird, wobei die anzulegende Stellgröße eine erste Komponente (28) umfasst, die sich aus einer Verarbeitung des ganzen oder eines Teils des Signals (3) ergibt, das vom Lenkungssteuerteil abgegeben wird, **dadurch gekennzeichnet, dass** die Stellgröße mindestens eine zweite Komponente (29) umfasst, die aus der ersten Komponente (28) und aus dem vom Lenkungssteuerteil abgegebenen Signal erarbeitet wird, wobei die Erarbeitung der zweiten Komponente einen Schritt umfasst, der darin besteht, ein Signal (25) zu erarbeiten, das für einen Winkelversatz steht, und ein Signal (29) zu erarbeiten, das für einen Nachstellwinkel steht und dazu bestimmt ist, mit der ersten Komponente der Stellgröße (28) kombiniert zu werden, um nach einer vorbestimmten Dauer für ein und denselben Wert des vom Lenkungssteuerteil abgegebenen Signals dieselbe Stellgröße zu erhalten.

2. Verfahren nach Anspruch 1, **dadurch gekennzeichnet, dass** die Verarbeitung (14), die zum Erhalten der ersten Komponente angewendet wird, eine Frequenzfilterung umfasst.

3. Verfahren nach Anspruch 1, **dadurch gekennzeichnet, dass** die Verarbeitung (14), die zum Erhalten der ersten Komponente angewendet wird, eine Sättigung oder Scheitelwertbegrenzung umfasst.

4. Verfahren nach Anspruch 1, **dadurch gekennzeichnet, dass** die zweite Komponente (29) eine vorbestimmte höchste Amplitude aufweist.

5. Verfahren nach Anspruch 1, **dadurch gekennzeichnet, dass** das Steuersignal (3), das vom Lenkungssteuerteil abgegeben wird, für dessen Drehwinkel steht.
